# EUROPEAN PATENT APPLICATION

(11) **EP 4 650 690 A1**
(43) Date of publication of application: **19.11.2025**
(21) Application number: 24176470.3
(22) Date of filing: 16.05.2024
(51) Int. Cl.: F25C 5/04

(54) **ICE CRUSHING TOOL AND HOUSEHOLD APPLIANCE**

(71) Applicant: BSH Hausgeräte GmbH, 81739 München (DE)
(72) Inventor: Veber, Matic, 3331 Nazarje (SI); Sedovsek, Aleksander, 3331 Nazarje (SI); Pesec, Jurij, 3301 Petrovce (SI)

(57) **Abstract**

Disclosed is an ice crushing tool for an electric ice crushing household appliance, comprising at least one wing with a blunt front edge in an axial distance upwards to at least one blade, and an electric ice crushing household appliance.

## Description

The present invention concerns an ice crushing tool for an electric ice crushing household appliance and an electric ice crushing household appliance.

Crushed ice for food and drink preparations requires fairly uniform particles. The particles should not be too small (too crushed - snow) nor too large. The particles should have an adequate size and an adequate texture. For instance, a snow-like texture should be avoided.

However, by using known electric ice crushing household appliances such as high-speed mixers, choppers, blenders these criteria are often not met. One problem is that the rotating ice crushing tool of ice crushing machine crushes the ice for so long in the lower part until large pieces that randomly fall due to weight into the crushing zone of the tool are also crushed. This is especially a problem with a large amount of ice. The ice is already crushed below and is further crushed into snow, while there are still large cubes in the bowl.

It is an object of the present invention to provide an alternative ice crushing tool for an electric ice crushing household appliance and an optimised electric ice crushing household appliance.

The object is achieved by an ice crushing tool with the features of claim 1 and by an electric ice crushing household appliance with the features of claim 11. Advantageous embodiments are disclosed in the dependent claims, in the description, and in the drawings.

An inventive ice crushing tool for an electric ice crushing household appliance comprises a longitudinal body, at least one blade and at least a first wing-like protrusion. The longitudinal body defines / extends along a rotating axis of the tool which is adapted to be in engagement with a coupling means of the ice crushing household appliance in order to establish an operative connection between the tool and an electric motor of the ice crushing household appliance. The at least one blade is positioned at a lower portion of the longitudinal body and adapted to crush ice inside a bowl of the electric ice crushing household appliance when rotating. The at least first wing-like protrusion extends radially from the longitudinal body in an axial distance above the at least one blade.

An electric ice crushing household appliance according to the invention is equipped with an inventive ice crushing tool.

The at least one wing-like protrusion on the longitudinal body (stem) above the at least one blade creates a more dynamic movement of the crushed ice and/or the ice cubes. The at least one wing-like protrusion is designed to increase the speed of ice cubes that are bounced off the blade and return them back to the blade. In addition, the movement of the larger and smaller ice particles in the bowl is improved. Both prevents the rapid creation of snow before the ice cubes have been crushed to the desired extent. The at least one wing-like protrusion does not crush ice cubes, but rather hit, accelerate, and return them to the crushing area. This allows for more intensive crushing of ice on the blade and processing the same volume of ice in a shorter time than would be the case without the at least one wing-like protrusion. Consequently, this creates a more uniform texture of the crushed ice. The at least one wing-like protrusion prevents the at least one blade from crushing already crushed ice for too long due to not yet crushed ice cubes.

Preferably, the at least one protrusion and the blade are aligned offset to one another. By means of this, the ice is either moved by the protrusion or cut by the blade.

In order to shorten the processing time, a second protrusion is provided opposite to the first protrusion.

Advantageously, the at least one blade has the same offset to both protrusions. By means of this, a uniform processing of the ice during every rotation is achieved.

Axial distances between protrusions and a radial upper blade section or a bowl bottom are preferably different. This provides for a more thorough and effective hitting, accelerating and returning back of the ice cubes (ice). For instance, if an ice cube is accidentally missed by one wing-like protrusion it is definitely hit by the other one and returned back to the blade.

In another embodiment, the axial distances can also be the same.

In order to move the ice downwards to the at least one blade, a front edge of each protrusion is in a greater axial distance to the at least one blade than its rear edge. In other words, a lower surface of the protrusions is inclined such that a space between the protrusions and the blade is narrowed during operation.

Advantageously, the protrusions are narrowed from their roots to their tips. By means of this, processing of the ice can be improved.

The protrusions can have a smaller radial extension than the at least one blade. Due to this, the processing of the ice can further be improved.

Preferably, the blade has a stepwise shape with a radial lower section, a radial upper section and an axial middle section. In particular, if an axial distance between the rear edge of the protrusion and the front edge of the radial upper blade section is in a range between ½ to 1 height of the initial ice cubes to be crushed, optimal results can be achieved.

In what follows, an exemplary embodiment of the present invention is explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in the sole
- Figure 1:: perspective top view of a bowl of an electric ice crushing household appliance equipped with an inventive ice crushing tool;
- Figure 2:: an individual depiction of the ice crushing tool shown in Figure 1;
- Figure 3:: a side view of the ice crushing tool; and
- Figure 4:: a front view of the ice crushing tool;

Terms such as "axial" and "radial" refer to a rotation axis (longitudinal axis) of the ice crushing tool. In normal use, the rotating axis extends in vertical direction.

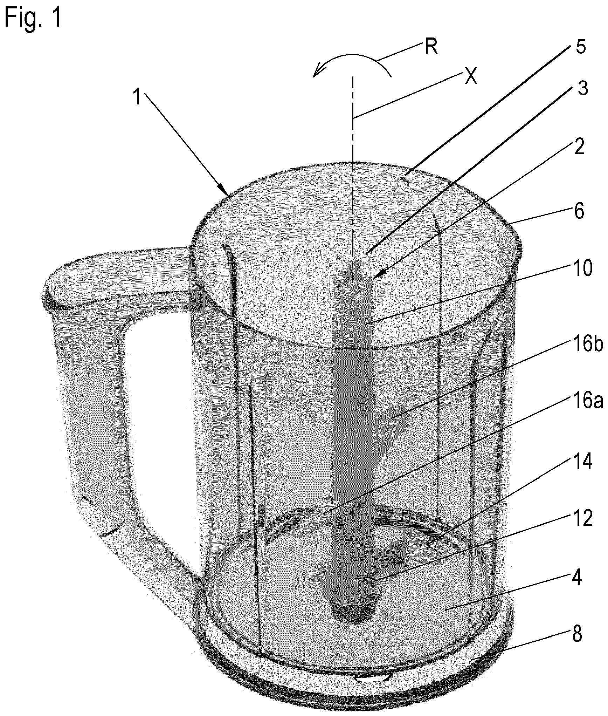

In Figure 1, a perspective view of a bowl 1 of an electric ice crushing household appliance (ice crushing machine) equipped with an inventive ice crushing tool (tool 2) is shown.

The exemplary shown bowl 1 has a bottom 4 and a cylindrical wall 6 defining a cavity for the ice / ice cubes to be crushed. In operation, the bowl 1 is positioned via a lower ring 8 on a worktop or a working surface. A lid (not shown) is placed on the bowl 1. The lid comprises a motor unit arrangement for receiving a motor unit of a hand-held blender or a hand mixer. The tool 2 is driven by the motor unit via a transmission (gear) located within the lid. The lid is attachable to the bowl 1 by means of a bayonet connection of which connectors 5 can be seen. Such lids are known in the art.

The tool 2 has a longitudinal body (stem) 10 defining its rotation axis X which extends orthogonally to the bottom 4. When driven, the stem 10 rotates around its rotation axis X in counter-clockwise direction R.

At its upper portion 3, adjacent to the lid (upper edge of the bowl 1), the stem 10 has a coupling element to be in engagement with a coupling means of the ice crushing machine in order to establish an operative connection between the tool 2 and an electric motor of the ice crushing machine.

At a lower portion of the stem 10, at the lower (foot) portion 12, an angled (stepped) blade 14 is provided adapted to crush ice cubes or other ice forms.

At a middle portion above the blade 14, the stem 10 has two wing-like radial protrusions (wings) 16a, 16b which are arranged opposite to each other and will be explained in the following in more detail.

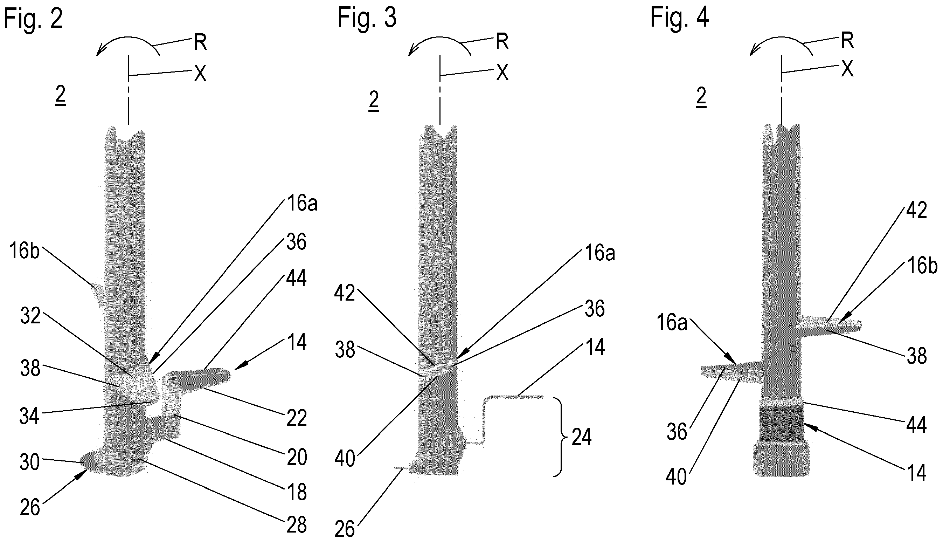

With reference to Figures 2, 3 and 4, the blade 14 has a radial lower section 18, an axial middle section 20 and a radial upper section 22. Preferably, the blade 14 is made of metal. Mainly, a cavity zone between the bowl bottom 4 and the upper section 22 of the blade 14 defines the crushing zone 24 in which the ice cubes are crushed by the blade.

In addition, at the lower portion of the stem 10 a blade element 26 is provided. The blade element 26 forms part of the blade 14. It is arranged opposite the radial lower section 18, the axial middle section 20 and the radial upper section 22. The blade 14 is overmoulded (insert moulded) in an injection moulding tool (not shown) by a material, preferably plastic material, of which the stem 10 and the wing-like radial protrusions 16a, 16b are made. A bead 28 is arranged peripherally around the lower portion in which a part of the blade 14 is received. It is realized in a (over)moulding process by means of which the tool 2 is produced. As seen in rotational direction R, the blade element 26 begins adjacent to the bowl bottom 4, crosses the stem 10 in an angled manner then transitions into the lower section 18, the middle section 20 and ends above in the upper section 22 of the blade 14 in an axial distance to the bowl bottom 4. The blade element 26 being part of the blade 14 is also preferably made of metal. Advantageously, the blade element 26 prevents the ice cubes (ice) from gathering close to the stem 10 where no processing takes place.

The wings 16a, 16b have the same shape and extend radially from the stem 10 opposite from each other. For the sake of clarity, only one wing 16a, 16b is provided with reference numbers.

Each wing 16a, 16b has the offset to the blade 14. Here, each wing 16a, 16b is positioned in a horizontal angle of 90° to the blade. Preferably, they are made of plastics. As seen from their roots 32 to their tips 34, they are narrowed. Thereby, they have a smaller radial extension than the blade 14.

Their front (leading) edges 36 are in a greater axial distance to the blade 14 than their rear (trailing) edges 38. By means of this, their under sides 40 facing the bowl bottom 4 are inclined horizontally in such a way that ice cubes are pushed downwards to the blade 14. Their top sides 42 are inclined correspondingly.

Their front edges 36 are blunt, they have an axial extension or are rounded in such a way that the wings 16a, 16b act as kind of ice shovel and not as a blade or knife. An axial distance between their rear edges 38 and a front edge 44 of the radial upper blade section 22 is in a range between ½ to 1 height of the initial ice cubes to be crushed. In this case axial distances of both wings 16a, 16b are different. In another embodiment, they can also be the same.

During operation, the tool 2 rotates in counter clockwise direction R around its rotating axis X. The blade 14 begins to crush the ice cubes which is put into bowl and which enters the crushing zone 24.

Ice cubes which are bounced off the blade 14 are accelerated by the wings 16a, 16b and are returned back to the blade 14. In addition, the movement of the larger and smaller ice particles in the bowl 1 is improved. Both prevents rapid creation of snow before the ice cubes have been crushed to the desired extent. The wings 16a, 16b do not crush the ice cubes, they hit them, accelerate them and return them back into the crushing zone 24 of the blade 14. By means of this, a more uniform texture of the crushed ice is achieved as processing of the ice cubes is balanced by returning those ice cubes accelerated into the crushing area which have left it.

Although in the shown embodiment the tool 2 has only one blade 14 and two wings 16a, 16b, the number of blades and/or the number of wings and/or their offset can vary.

The present invention can be used in a kitchen appliance and/or as a stand alone device. This includes any household machine or device for processing food, including top-driven machines/devices (i.e. hand-held blenders, hand mixers, stand-mixers) and bottom-driven machines/devices (i.e. foodprocessors, blenders).

Disclosed is an ice crushing tool for an electric ice crushing household appliance, comprising at least one wing with a blunt front edge in an axial distance above at least one blade, and an electric ice crushing household appliance.

### Reference signs

- 1: bowl
- 2: ice crushing tool (tool)
- 3: upper portion
- 4: bottom
- 5: connector (bayonet connection)
- 6: cylindrical wall
- 8: ring
- 10: longitudinal body (stem)
- 12: lower (foot) portion
- 14: blade
- 16a, b: wing-like protrusion (wing)

- 18: lower section
- 20: middle section
- 22: upper section
- 24: crushing zone

- 26: blade element
- 28: front area
- 30: middle and rear area

- 32: root
- 34: tip
- 36: front (leading) edge
- 38: rear (trailing) edge
- 40: under side
- 42: top side
- 44: front edge (radial upper blade section)

- X: rotating axis
- R: direction of rotation

## Claims

1. An ice crushing tool (2) for an electric ice crushing household appliance, comprising:
• a longitudinal body (10) defining a rotating axis (X) of the tool (2) which is adapted to be in engagement with a coupling means of the ice crushing household appliance in order to establish an operative connection between the tool (2) and an electric motor of the ice crushing household appliance;
• at least one blade (14) at a lower portion of the longitudinal body (10) adapted to crush ice inside a bowl (1) of the electric ice crushing household appliance during operation; and
• at least a first wing-like protrusion (16a, 16b) extending radially from the longitudinal body (10) in an axial distance above the at least one blade (14).

2. The ice crushing tool according to claim 1, wherein the at least one protrusion (16a, 16b) and the blade (14) are aligned offset to one another.

3. The ice crushing tool according to claims 1 or 2, wherein a second protrusion (16b) is provided opposite to the first protrusion (16a).

4. The ice crushing tool according to any of claims 1, 2 or 3, wherein the at least one blade (14) has the same offset to both protrusions (16a, 16b).

5. The ice crushing tool according to any of the preceding claims, wherein axial distances between both protrusions (16a, 16b) and a bowl bottom (4) are different.

6. The ice crushing tool according to any of the preceding claims, wherein a front edge (36) of each protrusion (16a, 16b) is in a greater axial distance to the at least one blade (14) than their rear edges (38).

7. The ice crushing tool according to any of the preceding claims, wherein the protrusions (16a, 16b) are narrowed from their roots (32) to their tips (34).

8. The ice crushing tool according to any of the preceding claims, wherein the protrusions (16a, 16b) have a smaller radial extension than the at least one blade (14).

9. The ice crushing tool according to any of the preceding claims, wherein the blade (14) has a stepwise shape with a radial lower section (18), a radial upper section (22) and an axial middle section (20).

10. The ice crushing tool according to any of the preceding claims, wherein the axial distance between the rear edge of the protrusion (16a, 16b) and the front edge (44) of the radial upper blade section (22) is in a range between ½ to 1 height of the initial ice cubes to be crushed.

11. An electric ice crushing household appliance equipped with an ice crushing tool (2) according to any of the preceding claims.
